# EUROPEAN PATENT APPLICATION

(11) **EP 2 134 136 A1**
(43) Date of publication of application: **16.12.2009**
(21) Application number: 09156213.2
(22) Date of filing: 25.03.2009
(51) Int. Cl.: H04W 74/02

(54) **Radio communication method and radio communication apparatus for random access**

(30) Priority: 09.06.2008 JP 2008150358
(71) Applicant: Fujitsu Limited, Kawasaki-shi, Kanagawa 211-8588 (JP)
(72) Inventor: Yokoyama, Hitoshi, Kawasaki-shi, Kanagawa 211-8588 (JP)
(74) Representative: Stebbing, Timothy Charles

(57) **Abstract**

A radio communication method for performing radio communication in a terminal apparatus (10) and a base station (50, 70), including: the base station allocating a first access slot to each individual terminal apparatus (10), and a second access slot to a plurality of the terminal apparatuses collectively, out of access slots to be used when the terminal apparatus (10) is connected to the base station; the base station (70) transmitting information of the allocated access slot to the terminal apparatus; and the terminal apparatus (10) receiving the information of the allocated access slot sent from the base station (70), and sending a signal to establish connection to the base station based on the received information of the access slot.

## Description

The present invention is related to a radio communication method and a radio communication apparatus.

LTE (Long Term Evolution) is under consideration as the next generation communication method for the third generation portable telephones. In LTE, a channel called RACH (Random Access Channel) is specified in order to establish communication between a UE (User Equipment) and a BS (Base Station) (e. g. 3GPP TS 36.300 V8.3.0 (2007-12)).

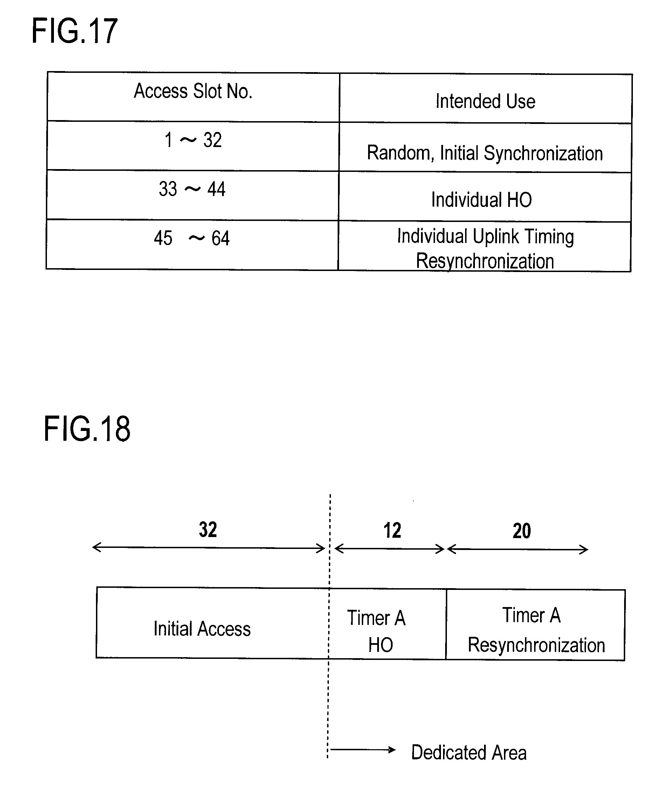

Fig. 17 and Fig. 18 depict an allocation example of access slot numbers of RACH in LTE. In RACH, access slots are divided (e.g. as time slots, along the time axis) according to the state of connection of UE to BS.

As Fig. 17 and Fig. 18 depict, if the number of access slots is 64, the 1st to 32nd slots are for initial synchronization. When the UE performs initial access with the BS, (one of) the 1st to 32nd access slots are selected randomly, and signals required for establishing the communication are sent using the slots.

The 33rd to 44th access slots are for handover (HO), and the 45th to 64th access slots are for resynchronizing the uplink timing. The BS allocates these access slots to each UE, and sends this information to the UE. And when HO is performed or when resynchronization is performed in the uplink direction, the UE sends signals required for establishing communication to the BS using these access slots. The 33rd and later access slots are called "Dedicated RACHs" in LTE.

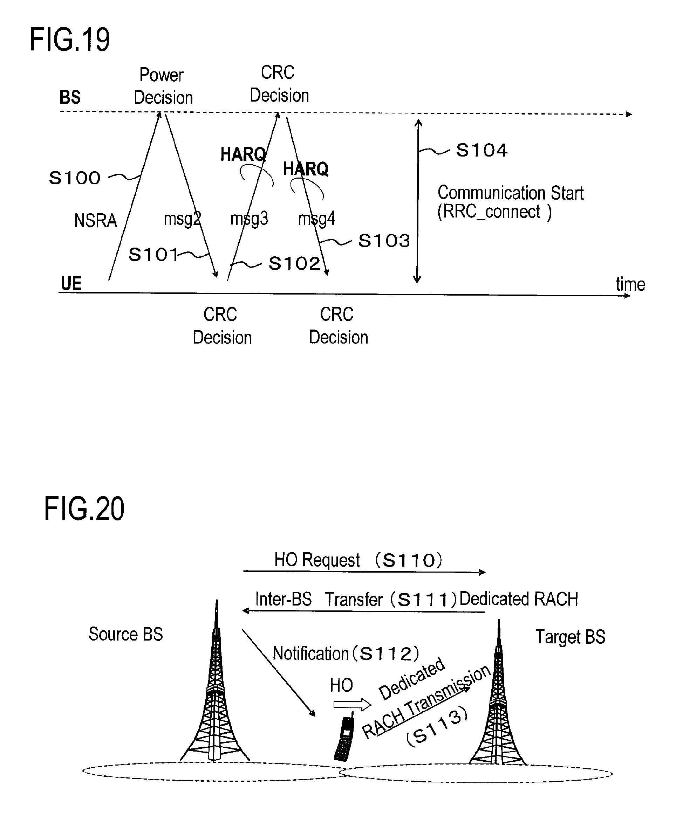

Fig. 19 is a diagram depicting an example of initial synchronization sequence in LTE. First the UE randomly selects any of the 1st to 32nd access slots for initial synchronization, and sends NSRA (Non Synchronous Random Access) using the slot (S100).

When the BS receives NSRA, the BS performs processing to detect NSRA. When the BS detects NSRA, the BS regards the slot number with which NSRA was sent as a temporary ID of the UE, and sends a message 2 (msg 2) including a C-RNTI (cell-specific radio network temporary identifier) having the temporary ID, a TA (Time Advance) of the uplink timing synchronization, and an authorization of the transmission opportunity for a message 3 (msg 3) (S101).

When the UE receives the message 2, the UE generates the message 3 including the temporary ID, information for RRC (Radio Resource Control) synchronization or the like, and sends the message 3 at a transmission timing at which uplink synchronization can be performed reflecting TA.

When the BS receives the message 3, the BS recognizes the temporary ID as the official ID by confirming that C-RNTI of the temporary ID is sent back and received by the UE. Then BS sends the signaling required for establishing RRC connection by using a message 4 (msg 4) (S103). After this, communication starts between the BS and the UE (S104).

Fig. 20 is a diagram depicting a sequence example of handover (HO) in LTE. This sequence is an example wherein "Dedicated RACH" is notified when HO is performed. When a Source BS which is a connection source base station decides to perform a handover to a Target BS which is a connection destination base station, the Source BS sends a handover (HO) request to the Target BS (S110). When the Target BS receives the HO request, the Target BS allocates an access slot (e.g. one of the 33rd to 44th access slots) of the Dedicated RACH to the individual UE, and sends the information to the Source BS (S11). The Source BS notifies the allocated access slot to the UE (S112). After the line with the Source BS is disconnected, the UE sends the Dedicated RACH using this access slot, and starts the communication line establishment processing with the Target BS (S113).

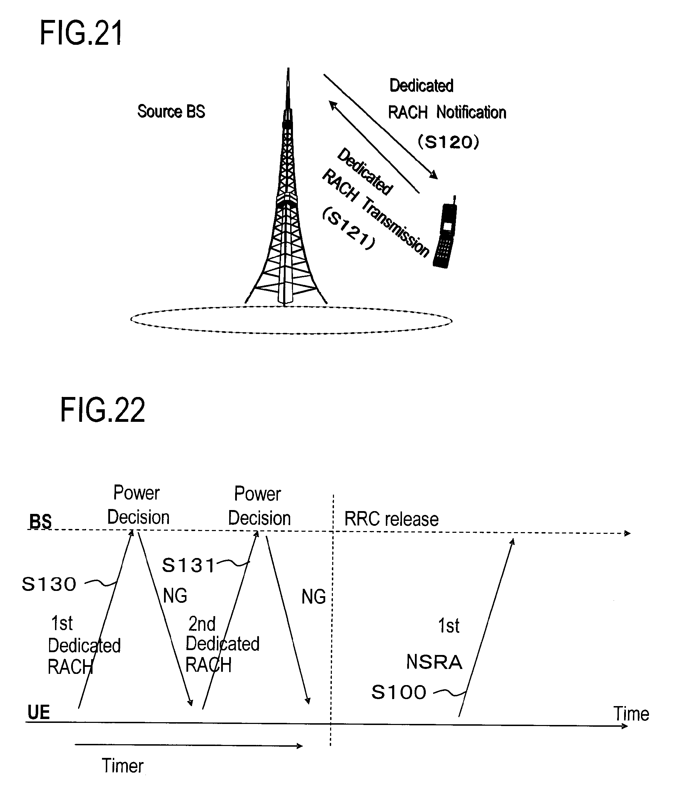

Fig. 21 is a diagram depicting a sequence example of uplink timing resynchronization in LTE. For example, this sequence is performed if uplink timing is out of synchronization with uplink timing synchronization when intermittent downlink communication is ongoing (e.g. chat, automatic update of Web Browsing) though the BS and UE are in the RRC connection state. When a downlink packet is sent from CN (Core Network) to the UE of which uplink timing may go out of synchronization, the Source BS allocates the access slot (one of the 45th to 64th access slots) of the Dedicated RACH to the individual UE. Then the Source BS sends the allocated access slot to the UE (S120). The UE sends the Dedicated RACH using this slot (S121). Hereafter the BS calculates synchronization timing and sends the synchronization timing value included in a downstream packet, whereby resynchronization is established.

The access slots of the Dedicated RACH are allocated by the BS, as mentioned above; an advantage of this is that collision with another user does not occur, however the following problems still remain.

The BS allocates a certain access slot (33rd or later slots in the case of Fig. 17) out of the Dedicated RACH to each UE, and UE use this slot, but if the communication environment between the UE and the BS is not good, the UE repeatedly attempts to establish communication using the allocated slot number of the Dedicated RACH. Fig. 22 is a diagram depicting this sequence example. Therefore a resource of the limited access slots (32 slots in the case of Fig. 17) is allocated to and occupied by the UE in a poor communication environment, and another UE cannot use this slot.

Also as Fig. 22 depicts, if a time out is generated between the UE and BS, an RRC release may occur. In this case, the UE performs processing to establish a communication line based on the transmission of NSRA. Therefore a delay is generated.

Embodiments of the present invention may provide a radio communication method and a radio communication apparatus (base station apparatus or terminal apparatus) which can effectively use the resource of access slots.

Embodiments of the present invention may also provide a radio communication method and a radio communication apparatus which prevent a delay in communication.

According to a first aspect of the invention, a radio communication method for performing radio communication between a plurality of terminal apparatuses and a base station apparatus, includes: the base station apparatus allocating a first access slot to each terminal apparatus, and a second access slot to a plurality of the terminal apparatuses in common, among access slots to be used when the terminal apparatus is connected to the base station apparatus; the base station apparatus transmitting information of the allocated access slot to the terminal apparatus; and the terminal apparatus receiving the information of the allocated access slot sent from the base station, and sending a signal to establish connection to the base station apparatus based on the received information of the access slot.

According to a second aspect of the invention, there is provided a radio communication method for performing radio communication between a terminal apparatus and a base station apparatus, comprising, in the base station apparatus: specifying a first period until a first access slot is released and a second period until a second access slot is released such as the first and second period have different values, wherein the first and second access slot is used by the terminal apparatus when the terminal apparatus is connected to the base station apparatus; allocating the first or second access slot to the terminal apparatus; and transmitting an information of the specified first and second period and of allocated access slots, to the terminal apparatus; and in the terminal apparatus: receiving the information of the specified first and second period and of allocated access slots, transmitted from the base station apparatus, and transmitting a signal to establish connection to the base station apparatus based on the received information.

Other aspects of the present invention, including software for causing a base station to perform the base station steps of either of the above methods, and a computer-readable medium on which the software is recorded, are as defined in the accompanying claims.

It is to be understood that both the foregoing general description and the following detailed description are exemplary and explanatory and are not restrictive of the invention, as claimed.

Reference is made, by way of example only, to the accompanying drawings in which:
Fig. 1 is a diagram depicting an allocation example of access slots of RACH;
Fig. 2 is a diagram depicting a sequence example using Dedicated RACH;
Fig. 3 is a diagram depicting an allocation example of access slots of RACH;
Fig. 4 is a diagram depicting a sequence example using Dedicated RACH;
Fig. 5 is a diagram depicting an allocation example of access slots of RACH;
Fig. 6 is a diagram depicting a configuration example of a Source BS;
Fig. 7 is a diagram depicting a configuration example of a Target BS and Source BS;
Fig. 8 is a diagram depicting a configuration example of a UE;
Fig. 9 is a diagram depicting a sequence example of HO using Dedicated RACH;
Fig. 10 is a diagram depicting a sequence example of uplink synchronization using Dedicated RACH;
Fig. 11 is a flow chart depicting an example of processing of allocating access slots hierarchically;
Fig. 12 is a flow chart depicting an example of processing of timer indications according to functional processing;
Fig. 13 is a flow chart depicting an example of processing of timer indications according to service priority;
Fig. 14 is a flow chart depicting an example of processing of timer indications according to UE categories;
Fig. 15 is a diagram depicting an allocation example of access slots of RACH;
Fig. 16 is a flow chart depicting a processing of timer indications according to the base station;
Fig. 17 is examples of intended use of the access slot numbers;
Fig. 18 is a diagram depicting an allocation example of access slots of RACH;
Fig. 19 is a diagram depicting a sequence example when initial synchronization is performed;
Fig. 20 is a diagram depicting a sequence example when HO is performed;
Fig. 21 is a diagram depicting a sequence example when resynchronization is performed in the uplink direction; and
Fig. 22 is a diagram depicting a sequence example when Dedicated RACH is used.

Embodiments will now be described with reference to the drawings.

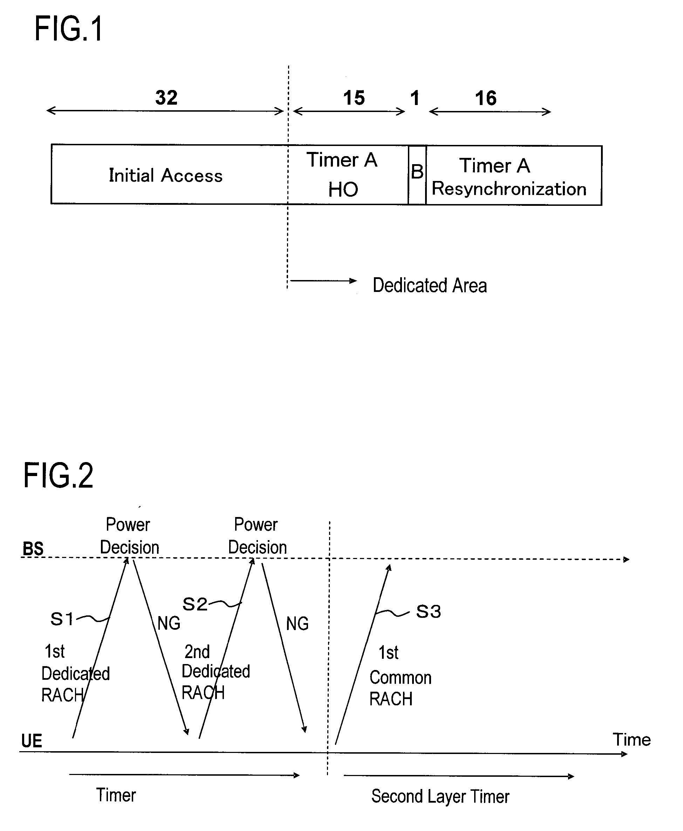

Fig. 1 to Fig. 5 depict allocation examples of access slots in a RACH, particularly in a Dedicated RACH, and sequence examples.

Of these, Fig. 1 and Fig. 2 are diagrams depicting a first allocation example of the Dedicated RACH and sequence examples thereof. The first allocation example is the Dedicated RACH for HO, where the first step is set by timer period "A" for each UE, and the next step is set by timer period "B" for UEs, which reached timeout in the first step, collectively as a UE group. Access slots of the Dedicated RACH are divided according to the state of a UE connected to a BS (HO and resynchronization), and an area of the Dedicated RACH is created hierarchically, and slots for the individual UE and slots for the UE group are used separately.

Here the timer periods "A" and "B" can be a same value or different values. The example in Fig. 1 depicts the case when "15" access slots are provided in the first step, and "1" access slot is provided in the next step, but these numbers do not matter, as long as "number of access slots in the first step" > "number of access slots in the next step" is established. In this case, the timer period of the access slots in the first step can be decreased.

Out of the hierarchical Dedicated RACH, the RACH in the next step is called a "Common RACH" in the embodiment. The access slots (1st to 32nd access slots) to be used for the initial random access are called a "Random RACH". The allocation of access slots of the Dedicated RACH depicted in Fig. 1 is performed by the BS, which will be described in detail later.

Fig. 2 is a diagram depicting a sequence example when the Dedicated RACH is used. Access slots (access slots in the first step and next step) of the Dedicated RACH are allocated from the BS to the UE in advance.

As Fig. 2 depicts, the UE attempts to establish communication with the BS a few times using the allocated slot (S1 to S2). Then, after the timer period (e.g. "A") elapses, the UE attempts to establish communication with the BS using Common RACH.

If the hierarchical Dedicated RACH is used in this way, the UE and BS can perform processing to start communication (S3 or later) while maintaining the RRC connection status by using Common RACH in the next step, even if communication cannot be established using the access slots in the first step. In this case, if the communication cannot be established in the access slots in the first step, the access slots allocated in the first step are released. Therefore a situation where a resource of the access slots is occupied can be eliminated, and the resource can be used effectively. In other words, this timer period is an active period until the resource of the access slots is released.

Also by using the Common RACH, a state of the UE, of which a transmission line is too poor to establish communication in the Dedicated RACH in the first step, occupying the access slots in the first step, can be quickly released, and the recoverable UE, out of a group of UEs of which the transmission line is poor, can be relieved. Therefore a fatal delay in real-time communication in which the UE performs the RRC release can be avoided by appropriately keeping the timer in the first step and the timer in the next step of the Dedicated RACH.

Fig. 1 and Fig. 2 depict an example of using the Dedicated RACH for HO hierarchically, but the Dedicated RACH for resynchronization may be used hierarchically.

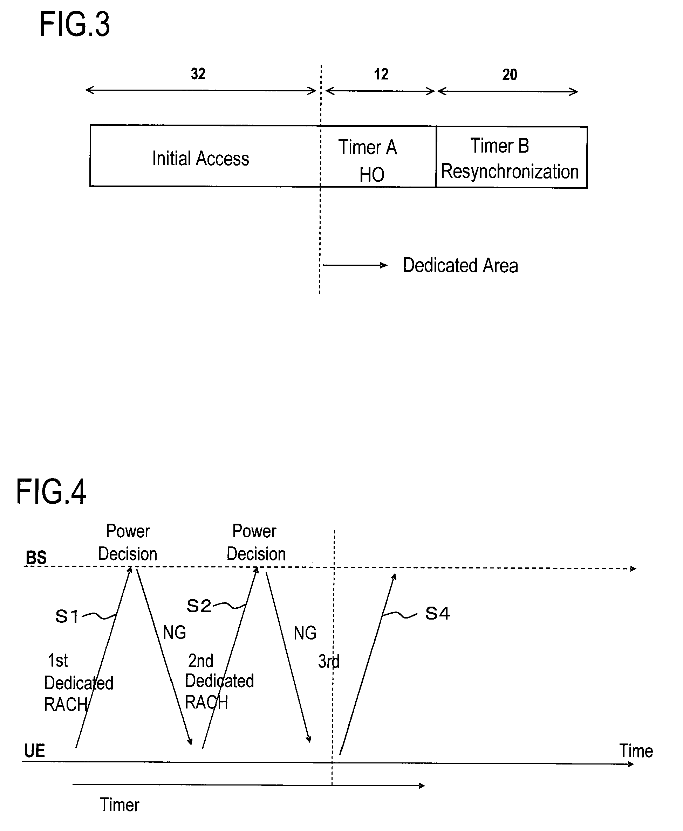

Fig. 3 and Fig. 4 are diagrams depicting a second allocation example of the Dedicated RACH and sequence example. The second allocation example is a case of setting independent timers for the access slot for HO and access slot for uplink timing resynchronization respectively. This is an example of setting different timers according to the individual state when the UE is connected to the BS.

HO includes communication processing not only between the BS and UE but also between the BS and BS (e.g. packet transfer processing). On the other hand, resynchronization is a communication only between the BS and the UE.
Therefore it is preferable to make the timer period of the access slot for HO longer than that of the access slot for resynchronization, so that a communication delay between the BS and BS can be considered. Also the access slot for resynchronization does not involve packet transfer processing, so the timer period thereof can be shorter than the access slot for HO. Hence the timer periods are set such that the relationship "A" > "B" is established, where "A" is the timer period of the access slot for HO of the Dedicated RACH, and "B" is the timer period of the access slot for resynchronization. This timer period setting is performed in the BS. This will be described in detail later.

Fig. 4 is a diagram depicting a sequence example when access slots of the Dedicated RACH are used. By extending the timer period, the third retry Dedicated RACH can be sent (S4), as depicted in Fig. 4. Therefore communication can be more easily established using the access slots in the first step. When the time period "A" is too long, the resource is occupied, so the Common RACH may be used as in the case of the first allocation example.

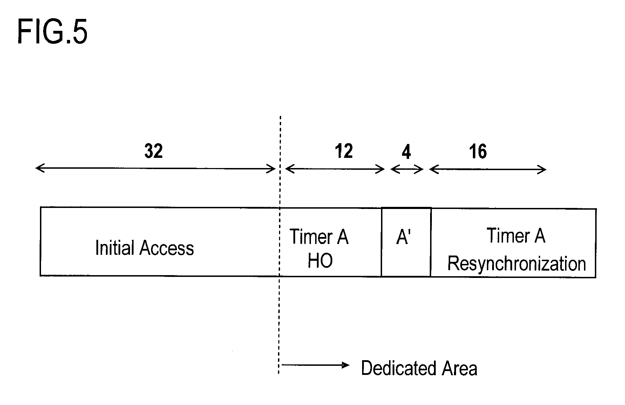

Fig. 5 is a diagram depicting a third allocation example of the Dedicated RACH. The third allocation example is a case of setting the timers appropriately, as in the case of the second allocation example.

In the example depicted in Fig. 5, a part of the area of the access slot for HO is set as timer A, and the other area is set separately as timer A' (time period is A > A'). For example, in the case of VoIP (Voice over Internet Protocol) service, a packet transmission delay of about several hundred ms is within a quality tolerance range, so a relatively long timer period is set using the timer period "A" access slot. On the other hand, in the case of FTP (File Transfer Protocol) service, the packet transmission delay is not very critical as VoIP, so a short timer period is set using the timer period "A'" access slot. Thus the resource of the Dedicated RACH can be effectively used.

One of the causes of the packet transmission delay is that data is continuously being stored in the buffer of the BS. In this case, the data stored in the buffer can all be processed if the transmission rate (or communication speed) of the UE is fast. So timer A' access slot is allocated to the UE of which UE category is low (communication speed is slow), and the timer A access slot is allocated to the UE of which UE category is high. In this case as well, the resource of the Dedicated RACH to be allocated to the individual UE can be effectively used.

In the case of the third allocation example, access slots not only for HO but also for resynchronization may be divided into separate areas, to which different timer periods are set respectively.

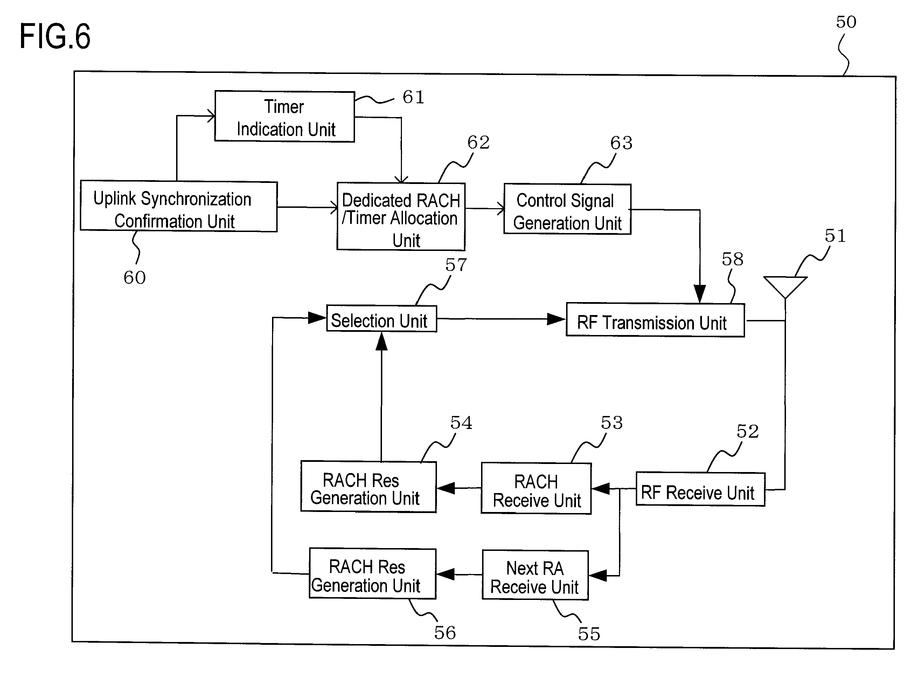

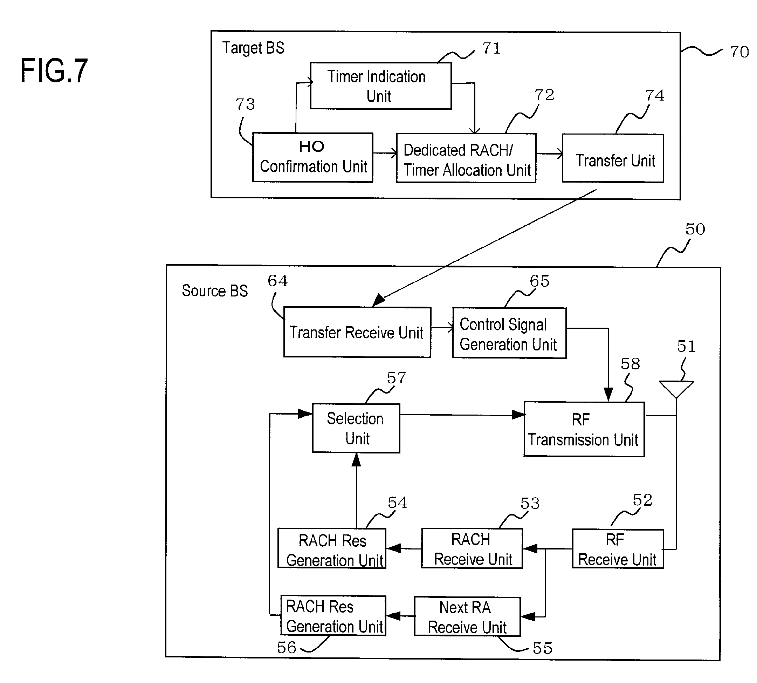

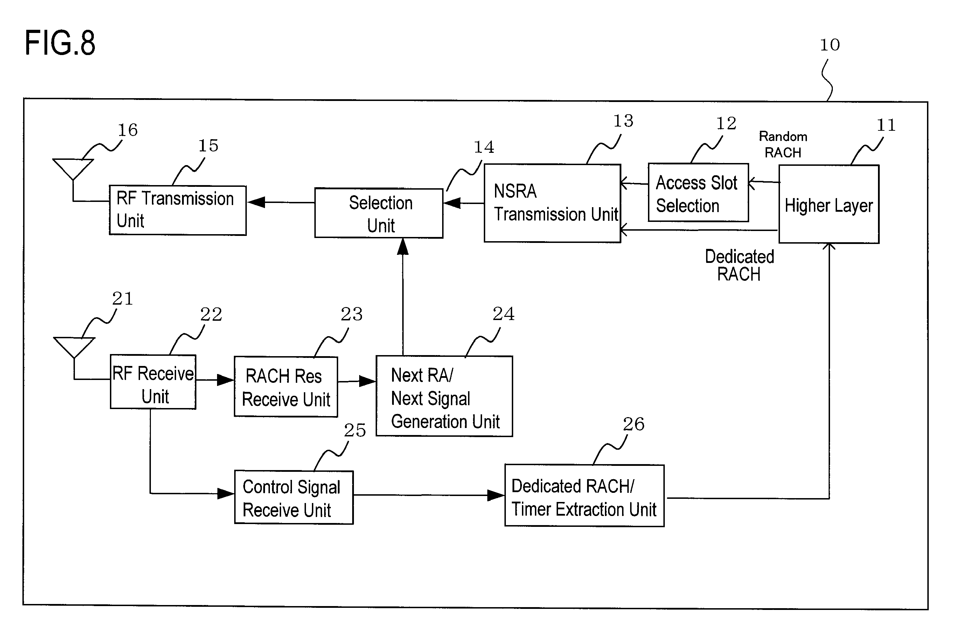

Now each configuration example of the BS and UE is described. Fig. 6 is a diagram depicting a configuration example of a Source BS 50, Fig. 7 is of a Source BS 50 and a Target BS 70, and Fig. 8 is of a UE 10. The BS 50, 70 and the UE 10 are radio communication apparatuses, where the BS 50 and 70 are base station apparatuses, and the UE 10 is a terminal apparatus.

As Fig. 6 depicts, the Source BS 50 includes an antenna 51, RF receive unit 52, RACH receive unit 53, RACH Res generation unit 54, Next RA receive unit 55, RACH Res generation unit 56, selection unit 57, RF transmission unit 58, uplink synchronization confirmation unit 60, timer indication unit 61, Dedicated/Timer allocation unit (hereafter "allocation unit") 62 and control signal generation unit 63.

The RF receive unit 52 down-converts the signal from the UE 10 received via the antenna 51, and outputs it to the RACH receive unit 53 and Next RA receive unit 55.

The RACH receive unit 53 demodulates NSRA (e.g. S1 in Fig. 2) among the signals output from the RF receive unit 52, and if a signal corresponding to the access slot number is received, the RACH receive unit 53 instructs the RACH Res generation unit 54 to generate a response signal of the RACH (RACH Res (e.g. msg 2 in Fig. 19)).

The RACH Res generation unit 54 generates a RACH Res signal based on the instruction from the RACH receive unit 53,and outputs it to the selection unit 57.

The Next RA receive unit 55 receives a Next RA (msg 3 in Fig. 19) out of the signals output from the RF receive unit 52, and instructs the RACH Res generation unit 56 to generate a response signal (msg 4 in Fig. 19) to the Next RA.

The RACH Res generation unit 56 generates the response signal based on the instruction from the Next RA receive unit 55,and outputs it to the selection unit 57.

The selection unit 57 selects one output of the RACH Res generation units 54 and 56, and outputs it to the RF transmission unit 58.

The RF transmission unit 58 up-converts the output signal from the selection unit 57 or the output signal from the control signal generation unit 63, and outputs it as an RF signal. The RF signal is sent from the antenna 51 to the UE 10.

The uplink synchronization confirmation unit 60 confirms uplink synchronization for the UE 10 in the RRC connection state. For example, this confirmation is performed depending on whether a periodic signal, which is sent from the UE 10, is received or not. If the UE 10 is out of synchronization, the uplink synchronization confirmation unit 60 outputs a signal to instruct a indication of the timer for uplink resynchronization to the timer indication unit 61, and a signal to instruct allocation of access slots for uplink resynchronization out of the Dedicated RACH to the allocation unit 62 respectively.

The timer indication unit 61 specifies a timer to be allocated to the resynchronization slot out of the Dedicated RACH based on the instruction from the uplink synchronization confirmation unit 60. A timer period different from the timer period in the access slot for HO may be specified, as in the case of the second allocation example.

The allocation unit 62 retrieves an access slot for uplink resynchronization (e.g. one of 45th to 64th access slots) from the Dedicated RACH, based on the instruction from the uplink synchronization confirmation unit 60 and the timer period specified by the timer indication unit 61, and allocates a timer period to the access slot. The allocation unit 62 outputs this allocated information (hereafter "allocation information") to the control signal generation unit 63.

The control signal generation unit 63 generates a control signal based on the allocation information output from the allocation unit 62, and outputs it to the RF transmission unit 58. The allocation information is sent to the UE 10 as the control signal.

Fig. 7 is a diagram depicting a configuration example of the Target BS 70 and the Source BS 50. The Target BS 70 and the Source BS 50 are connected via a network. The Target BS 70 is a connection destination base station when the UE 10 performs HO, and the Source BS 50 is a connection source base station.

The Target BS 70 includes a timer indication unit 71 and Dedicated RACH/timer allocation unit (hereafter "allocation unit") 72, and furthermore includes an HO confirmation unit 73 and a transfer unit 74, as in the case of the Source BS 50 depicted in Fig. 6. The Source BS 50 furthermore includes a transfer receive unit 64 and a control signal generation unit 65.

The HO confirmation unit 73 outputs an instruction to specify a timer for the Dedicated RACH of HO, and an instruction to allocates access slots, to the timer indication unit 71 and the allocation unit 72 respectively, when the HO confirmation unit 73 detects an HO request sent from the Source BS 50.

The timer indication unit 71 specifies a timer period for the access slot for HO out of the Dedicated RACH based on the instruction output from the HO confirmation unit 73. For example, the timer indication unit 71 specifies a timer period of each access slot if the region of the Dedicated RACH is allocated hierarchically as in the case of the first allocation example (Fig. 1), a timer period different from that of the access slot for resynchronization as in the case of the second allocation example (Fig. 3), or a timer period different from a part of region of the access slot for HO and for other region thereof as in the case of the third allocation example (Fig.5). The timer indication unit 71 outputs this information to the allocation unit 72.

The allocation unit 72 retrieves the access slot for HO from the Dedicated RACH for the UE 10, based on the instruction output from the HO confirmation unit 73 and timer information output from the timer indication unit 71, and allocates the specified timer information to the slot for HO. For example, the allocation unit 72 allocates the access slot for HO (access slot in the first step) and the access slot of the Common RACH access slot in the next step, and specifies the respective timer, as in the case of the first allocation example (Fig. 1). The allocation unit 72 outputs this allocation information to the transfer unit 74.

The transfer unit 74 transfers the allocation information to the Source BS 50.

The transfer receive unit 64 of the Source BS 50 receives the allocation information, and outputs it to the control signal generation unit 65.

The control signal generation unit 65 generates a control signal based on the allocation information, and outputs it to the RF transmission unit 58. The access slot for HO out of the Dedicated RACH, and the timer period are sent to the UE 10 as the control signal.

The other configuration of the Source BS 50 depicted in Fig. 7 is the same as Fig. 6. The Source BS 50 depicted in Fig. 7 includes the processing units for uplink resynchronizations 60 to 63 as depicted in Fig. 6, but these are omitted to simplify the description.

Fig. 8 is a diagram depicting a configuration example of the UE 10. As Fig. 8 depicts, the UE 10 includes a high layer unit 11, access slot selection unit 12, NSRA transmission unit 13, selection unit 14, RF transmission unit 15, transmission antenna 16, receive antenna 21, RF receive unit 22, RACH Res receive unit 23, Next Ra/Next signal generation unit (hereafter "Next RA generation unit") 24, control signal receive unit 25 and Dedicated RACH/Timer extraction unit (hereafter "extraction unit") 26.

The high layer unit 11 judges whether the Random RACH or the Dedicated RACH is active. For example, it is judged as the Random RACH if the high layer unit 11 connects to BS 50 or 70 for the first time other than for HO, and as the Dedicated RACH if the schedule HO or uplink resynchronization processing is performed. In the case of initial access, the high layer unit 11 outputs this information to the access slot selection unit 12. In the case of the Dedicated RACH, the high layer unit 11 also outputs the access slot of the Dedicated RACH from the extraction unit 26 to the NSRA transmission unit 13. The high layer unit 11 holds and manages the timer period of the Dedicated RACH, which is output from the extraction unit 26. The transmission of signals such as Dedicated RACH is controlled in the timer period depicted in Fig. 2 and Fig. 4, by the high layer unit 11.

The access slot selection unit 12 randomly selects an access slot of the Random RACH (e.g. 1st to 32nd second access slots), and outputs it to the NSRA transmission unit 13.

The NSRA transmission unit 13 performs encoding as matching the access slot from the high layer unit 11 (the access slot of the Dedicated RACH), or the access slot from the access slot selection unit 12 (the access slot of the Random RACH), and outputs the result to the selection unit 14.

The selection unit 14 selects either the output from the NSRA transmission unit 13 or the output from the Next RA generation unit 24, and outputs the selected data to the RF transmission unit 15.

The RF transmission unit 15 up-converts the output signal from the selection unit 14, and outputs it as an RF signal. The dedicated RACH or Random RACH (NSRA), which is output from the NSRA transmission unit 13, is sent to the BS 50 (70) via the transmission antenna 16.

The RF receive unit 22 down-converts the signal received from the receive antenna 21, and outputs it to the RACH Res receive unit 23 and the control signal receive unit 25.

The RACH Res receive unit 23 demodulates the RACH Res signal (msg 2 and msg 4 in Fig. 19) for the Random RACH (NSRA), out of the signals from the RF receive unit 22.

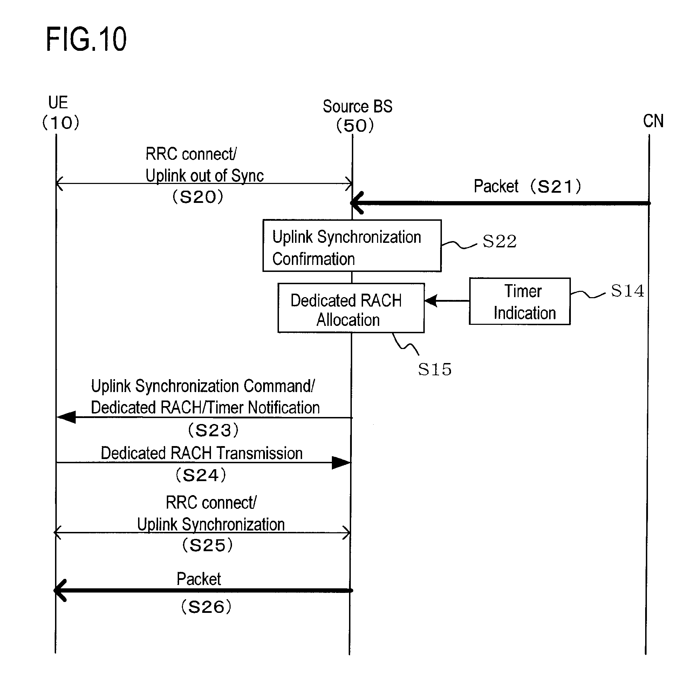

The Next RA generation unit 24 generates a Next RA signal (msg 3 in Fig. 10) and Next Signal (signal after RRC_connect), when the Next RA generation unit 24 inputs the RACH Res signal output from the RACH Res receive unit 23. The Next RA generation unit 24 outputs these generated signals to the selection unit 14. The Next RA signal and the Next Signal are sent to the BS 50 (70) via the transmission antenna 16.

The control signal receive unit 25 demodulates the control signal sent from the BS 50, and outputs it to the extraction unit 26.

The extraction unit 26 extracts the allocation information (the access slot of the Dedicated RACH and the timer period) from the control signal, and outputs it to the high layer unit 11.

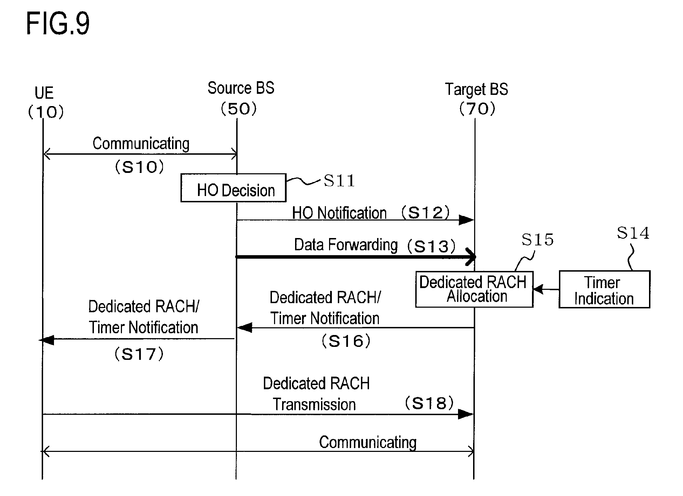

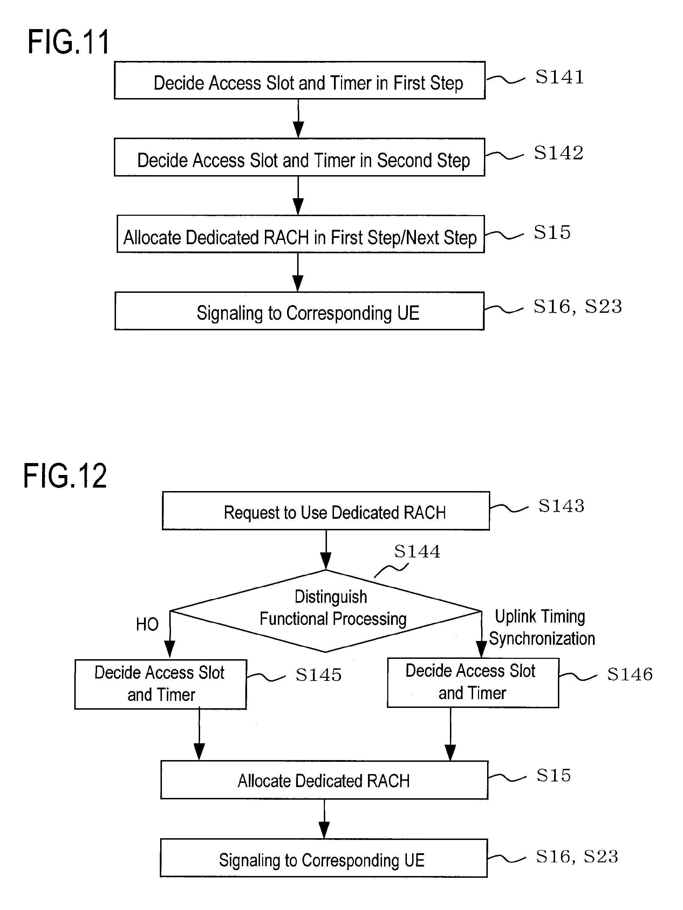

An operation will be described next. Fig. 9 and Fig. 10 depict sequence examples, and Fig. 11 to Fig. 14 are flow charts depicting examples of timer indications and other processings respectively.

Fig. 9 is a diagram depicting a sequence example of HO using Dedicated RACH. When the UE 10 is communicating with the Source BS 50 (S10), the Source BS 50 detects HO based on the HO decision (S11).

Then the Source BS 50 notifies the HO request to the Target BS 70 (S12). The Source BS 50 also sends the data stored in the buffer to the Target BS 70 (S13).

The Target BS 70 specifies a timer for the access slot for HO in the Dedicated RACH when the Target BS 70 receives the HO request (S14). For example, the timer period different from that for resynchronization is specified, as in the case of the second allocation example (Fig. 3).

Then the Target BS 70 retrieves (allocates) access slots (S15). For example, the Target BS 70 may allocate the access slots hierarchically using the Common RACH (Fig. 1), or allocate different access slots depending on the service type (Fig. 5).

Then the Target BS 70 notifies the allocation information to the Source BS 50 (S16). The Source BS 50 also sends the allocation information to the UE 10 (S17).

The UE 10 transmits the Dedicated RACH (S18) using the allocated access slot and performs processing to establish communication with the Target BS 70. The Dedicated RACH is transmitted within the specified timer period. Then communication starts between the UE 10 and the Target BS 70.

Fig. 10 is a diagram depicting an example of the uplink resynchronization sequence using the Dedicated RACH. This is an example when the UE 10 and Source BS 50 are connected by RRC, but the UE 10 becomes out of uplink synchronization (S20) because data communication did not occur for a while, and a packet is transferred from the CN (Core Network) (S21).

The BS 50 confirms the uplink synchronization (S22), and if the BS 50 detects out of synchronization, the BS 50 specifies the timer in the access slots for uplink resynchronization of the Dedicated RACH (S14), and allocates the access slots (S15). For example, the BS 50 allocates the access slots for resynchronization as depicted in Fig. 1, or specifies the timer different from that of the access slot for HO as depicted in Fig. 3.

Then the BS 50 sends the allocation information to the UE 10 (S23).

Then the UE 10 transmits the Dedicated RACH using the allocated access (S24), and performs uplink resynchronization processing. The Dedicated RACH is transmitted within a specified timer period.

Then the UE 10 and BS 50 resynchronize in the uplink direction (S25), and a packet is sent (S26).

Fig. 11 to Fig. 14 are flow charts depicting the timer indications and other processings in the BS 50 (or 70). These processings are performed in the timer indication units 61 and 71 and allocation units 62 and 72.

Fig. 11 is an example of timer indications when the access slots are allocated hierarchically (Fig. 1).

As Fig. 11 depicts, the BS 70 decides the timer for access slots in the first step (S141).

Then the BS 70 decides the timer for access slots in the next step (S142).

Then the BS 70 allocates each access slot of the first step and second step (S15), and notifies this information to the corresponding UE 10 (S16, S23).

The BS 70 (or 50) notifies the access slots and the timer of the first step, and the access slots and the timer of the next step respectively, to the UE 10, if the Dedicated RACH is used hierarchically

Fig. 12 is an example when the functional processing, whether HO or uplink timing resynchronization, is distinguished, and the timer period corresponding to each functional processing is decided.

BS 50 and 70 detect a request for using the Dedicated RACH (S143) by confirming the reception of the HO request (S12) or the confirmation of an out of uplink synchronization (S22).

Then BS 50 or 70 distinguishes the functional processing (S144), and if HO, BS 50 or 70 decides a timer for the access slot for HO (S145), allocates the access slots (S15), and notifies this information to the corresponding UE 10 (S16).

On the other hand, in the case of uplink timing synchronization, the BS 50 or 70 decides the access slot for uplink timing and allocates the Dedicated RACH (S146, S15), and notifies this information to the corresponding UE 10 (S23).

The timer period is decided so that timer period is different from each other, as depicted in Fig. 3, for example (S145, S146).

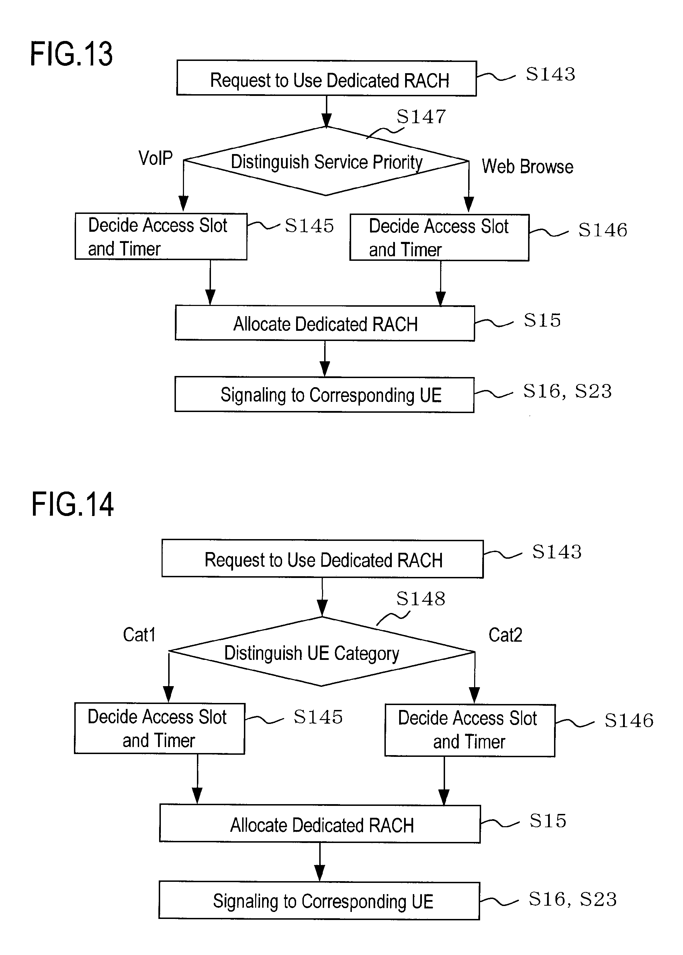

Fig. 13 is an example when a timer is specified according to the type of service. This example is effective when different timers are specified for the part of the region and the other region, out of the access slot region for HO, as depicted in Fig. 5.

The BS 50 or 70 distinguishes the service type based on the service currently being communicated (S147), and decides a short timer period in the case of VoIP (S145), for example, and decides a long timer period in the case of a Web Browser (S146). The timer period according to the respective service type is set for the Dedicated RACH.

This service type is an information which the BS 50 can obtain when communicating with the UE 10, and can distinguish the service type based on this information (S145).

Fig. 14 is a flow chart depicting a case of specifying a timer of the Dedicated RACH according to the UE categories. This example is also effective when different timers are specified for the part of the region and the other region, as depicted in Fig. 5.

The BS 50 or 70 can obtain information on the UE categories before HO, or when uplink synchronization with the UE 10 is performed. Based on these UE categories (e.g. communication speed of each UE 10), the BS 50 or 70 distinguishes the UE categories (S148), and allocates a short timer period to the UE 10 in category 1, and a long timer period to the UE 10 in category 2 (S145, S146). Access slots and timer period corresponding to the UE categories are set.

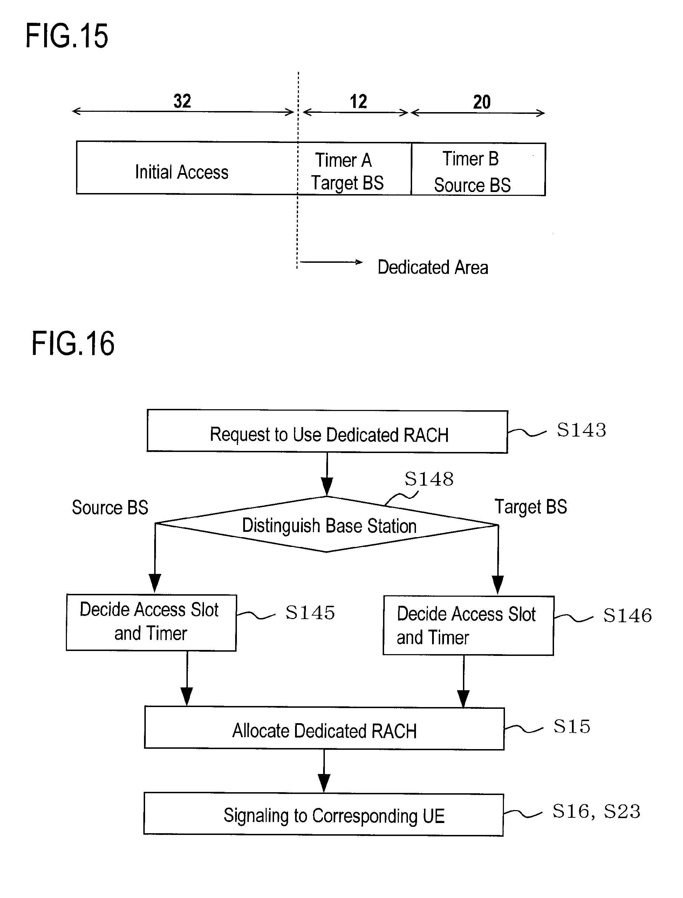

Another example is described next. Fig. 15 and Fig. 16 depict an example when the Source BS 50 and Target BS 70 specify different timers. For example, a short timer period is specified if the BS 50 is Source BS, and a long timer period is specified if the BS 50 is the Target BS. If the BS 50 is a local base station of the UE 10, the UE 10 directly communicates with the BS 50. In this case, the procedure for communication establishment processing is simple, so the timer period is set to be relatively short, so as to optimize the period for the communication establishment processing. On the other hand, if the BS 50 is the Target BS, many procedures are required for communication establishment processing, so the timer period is set to be long, so as to optimize the period for the communication establishment processing.

Fig. 16 is a flow chart depicting the case of specifying the timer for Dedicated RACH.

BS 50 (70) communicates with the UE 10 before HO or before uplink resynchronization, whereby it can be distinguished whether a local station is the Source BS, and if HO is performed, it can be distinguished whether the local station is the Target BS using the HO request. Using this information, the BS 50 (70) distinguishes whether the local station is the Source BS or Target BS (S148), allocates access slots, and decides the timer period accordingly (S145, S146, S15). Then BS 50 (70) notifies the allocation information to the UE 10 (S16, S23).

In all the above examples, the case when the total number of access slots in the RACH is 64 was described. However, the present invention can also be implemented using a different number of slots. This is because even if the number of slots changes, the access slots (Dedicated RACH) which the BS 50 or 70 allocates can be hierarchical, and different timers can be set for the access slots for HO and for the access slot for resynchronization.

The intended use of the Dedicated RACH in the above description is for HO and resynchronization, but the present invention is not limited to this, and can be used for various cases, including the case of performing an uplink data transmission request or a downlink data transmission request.

According to the present invention, the resource of the access slots can be effectively used. Also a delay in communication can be prevented.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the claims.

## Claims

1. A radio communication method for performing radio communication in a terminal apparatus and a base station apparatus, comprising:
allocating a first access slot to each of the terminal apparatus, and a second access slot to a plurality of the terminal apparatuses, out of access slot to be used when the terminal apparatus is connected to the base station apparatus, in the base station apparatus;
transmitting an information of the allocated access slot to the terminal apparatus, in the base station apparatus; and
receiving the information of the allocated access slot sent from the base station, and sending a signal to establish connection to the base station apparatus based on the received information of the access slot, in the terminal apparatus.

2. The radio communication method according to Claim 1, further comprising:
specifying a first period until the first access slot is released and a second period until the second access slot is released such as the first and second period is different values, in the base station apparatus,
wherein, in the sending step, the base station apparatus sends the information of the access slot and an information of the first and second period.

3. The radio communication method according to Claim 1 or 2, wherein the first and second access slot are access slots which are used when the terminal apparatus performs handover, or when the terminal apparatus performs resynchronization with the base station apparatus.

4. A radio communication method for performing radio communication in a terminal apparatus and a base station apparatus, comprising:
specifying a first period until a first access slot is released and a second period until a second access slot is released such as the first and second period is different values, in the base station apparatus, wherein the first and second access slot is used by the terminal apparatus when the terminal apparatus is connected to the base station apparatus;
allocating the first or second access slot to the terminal apparatus, in the base station apparatus;
transmitting an information of the specified first and second period and of allocated access slots, to the terminal station, in the base station apparatus; and
receiving the information of the specified first and second period and of allocated access slots, transmitted from the base station apparatus, and transmitting a signal to establish connection to the base station apparatus base on the received information.

5. The radio communication method according to Claim 4, wherein, in the allocating step, the base station apparatus allocates the fist or second access slot according to a state when the terminal apparatus is connected to the base station apparatus.

6. The radio communication method according to Claim 5, wherein the state when the terminal apparatus is connected to the base station apparatus is when the terminal apparatus performs handover, or when the terminal apparatus performs resynchronization with the base station apparatus.

7. The radio communication method according to Claim 4, 5, or 6, wherein, in the allocating step, the base station apparatus allocates the first or second access slot according to a service provided to the terminal apparatus.

8. The radio communication method according to Claim 4, 5, 6, or 7, wherein, in the allocating step, the base station apparatus allocates the first or second access slot according to a communication speed of the terminal apparatus.

9. The radio communication method according to any of Claims 4 to 8, wherein, in the allocating step, the base station apparatus allocates the first or second access slot depending on whether the base station apparatus is a base station to which the terminal apparatus is connected.

10. A base station apparatus for performing radio communication to a terminal apparatus, comprising:
an allocation unit which allocates a first access slot to each of the terminal apparatus and a second access slot to a plurality of the terminal apparatus, out of access slots to be used when the terminal apparatus is connected to the base station apparatus; and
a transmission unit which sends an information of the allocated access slots to the terminal apparatus.

11. A base station apparatus for performing radio communication to a terminal apparatus, comprising:
an indication unit which specifies a first period until a first access slot is released, and a second period until a second access slot is released, such as the first and second period is different values, wherein the first and second access slot is used by the terminal apparatus when the terminal apparatus is connected to the base station apparatus;
an allocation unit which allocates the first or second access slot to the terminal apparatus; and
a transmission unit which sends an information of the specified the first and second period and of the allocated access slots, to the terminal apparatus.

12. Software which, when executed by a processor of a base station in a wireless communication system, provides the base station apparatus according to claim 10 or 11.

13. A computer-readable medium on which is recorded the software according to claim 12.
